# EUROPÄISCHE PATENTSCHRIFT

(11) **EP 1 244 512 B1**
(45) Veröffentlichungstag und Bekanntmachung des Hinweises auf die Patenterteilung: **02.02.2005**
(21) Anmeldenummer: 01998390.7
(22) Anmeldetag: 24.11.2001
(51) Int. Cl.: B01D 53/94, F01N 3/20, F01N 3/36, F01N 3/025

(54) **EINRICHTUNG UND VERFAHREN ZUR NACHBEHANDLUNG VON ABGASEN**
DEVICE AND METHOD FOR SUBSEQUENTLY TREATING EXHAUST GASES
DISPOSITIF ET PROCEDE DE TRAITEMENT SUBSEQUENT DE GAZ D'ECHAPPEMENT

(30) Priorität: 30.11.2000 DE 10059427
(43) Veröffentlichungstag der Anmeldung: 02.10.2002
(73) Patentinhaber: ROBERT BOSCH GMBH, 70442 Stuttgart (DE)
(72) Erfinder: SCHALLER, Johannes, 71229 Leonberg (DE); WEBER, Georg, 74336 Brackenheim-Stock (DE); HARNDORF, Horst, 34270 Schauenburg (DE)
(86) Internationale Anmeldenummer: PCT/DE2001/004433
(87) Internationale Veröffentlichungsnummer: WO 2002/043840

(56) Entgegenhaltungen:
- GB-A- 2 357 047
- US-A- 5 189 876
- US-A- 5 826 425

## Beschreibung

### Stand der Technik

Die Erfindung geht aus von einer Einrichtung beziehungsweise einem Verfahren zur Nachbehandlung von Abgasen einer Brennkraftmaschine nach der Gattung der unabhängigen Ansprüche. Es ist schon eine derartige Einrichtung beziehungsweise ein derartiges Verfahren aus der deutschen Patentanmeldung mit dem Aktenzeichen 44 36 415.6 bekannt, bei der beziehungsweise bei dem jedoch ein zur Nachbehandlung verwendetes Hilfsmittel in verdampfter Form dem Abgastrakt zugeführt wird. Eine hierzu verwendete Verdampfungseinheit kann nur eine begrenzte Heizleistung zur Verfügung stellen, so dass bei hohen Drehzahlen der Brennkraftmaschine Schwierigkeiten in der Bereitstellung einer ausreichenden Menge an Hilfsmittel auftreten können.

### Vorteile der Erfindung

Die erfindungsgemäße Einrichtung beziehungsweise das erfindungsgemäße Verfahren mit den kennzeichnenden Merkmalen der unabhängigen Ansprüche haben demgegenüber den Vorteil, in jedem Betriebszustand eine ausreichende Beimischung von Hilfsmittel zur Nachbehandlung des Abgases zu gewährleisten. Die Beimischung des Hilfsmittels in flüssiger Form und die Verdüsung durch einen entsprechenden Vordruck stellt eine effiziente Mischung des Hilfsmittels und des Abgases sicher. Die entstehenden fein verteilten Tropfen des Hilfsmittels verdampfen durch den Einfluß der Wärme des umgebenden Abgases. Die Turbulenz im Abgas, die durch den Einspritzvorgang noch verstärkt wird, sorgt für eine gute Vermischung des Kraftstoffdampfes mit dem Abgas.

Durch die in den abhängigen Ansprüchen aufgeführten Maßnahmen sind vorteilhafte Weiterbildungen und Verbesserungen der in den unabhängigen Ansprüchen angegebenen Einrichtung beziehungsweise des angegebenen Verfahrens möglich. Besonders vorteilhaft ist die Bereitstellung des Hilfsmittels in Form von Kraftstoff über ein Common-Rail-System der Brennkraftmaschine, das bereits zur Einspritzung des Kraftstoffs in den Brennraum genutzt wird. Insbesondere bei Dieselmotoren mit Common-Rail-Einspritztechnik kann der für eine effiziente Verdüsung notwendige Druck aus der Verteilerleiste des Common-Rail-Systems zu jedem Zeitpunkt entnommen werden.

Weiterhin ist es vorteilhaft, als Einspritzanordnung eine bereits bekannte Baugruppe, einen Common-Rail-Injektor, zu verwenden, wie er auch im Motorblock zur dortigen Kraftstoffeinspritzung eingesetzt wird.

In vorteilhafter Weise wird das Hilfsmittel zur beispielsweise periodisch erfolgenden Regeneration eines Speicherkatalysators eingesetzt, der zur Reduktion von im Abgas vorhandenen Stickoxyden dient. Alternativ oder in Kombination mit der Verwendung zur Reduktion kann in vorteilhafter Weise eine Einspritzung auch zur Unterstützung der Verbrennung von Rußpartikeln vorgesehen sein. Die Einspritzung kann in vorteilhafter Weise durch Oxidation des Kraftstoffs an einem Katalysatormaterial mittels eines katalytischen Brenners das Abgas erwärmen.

### Zeichnung

Ausführungsbeispiele der Erfindung sind in der Zeichnung dargestellt und in der nachfolgenden Beschreibung näher erläutert. Die einzige Figur zeigt eine über eine Einspritzanordnung mit einer Katalysatoranordnung verbundene Hochdruckanordnung.

### Beschreibung der Ausführungsbeispiele

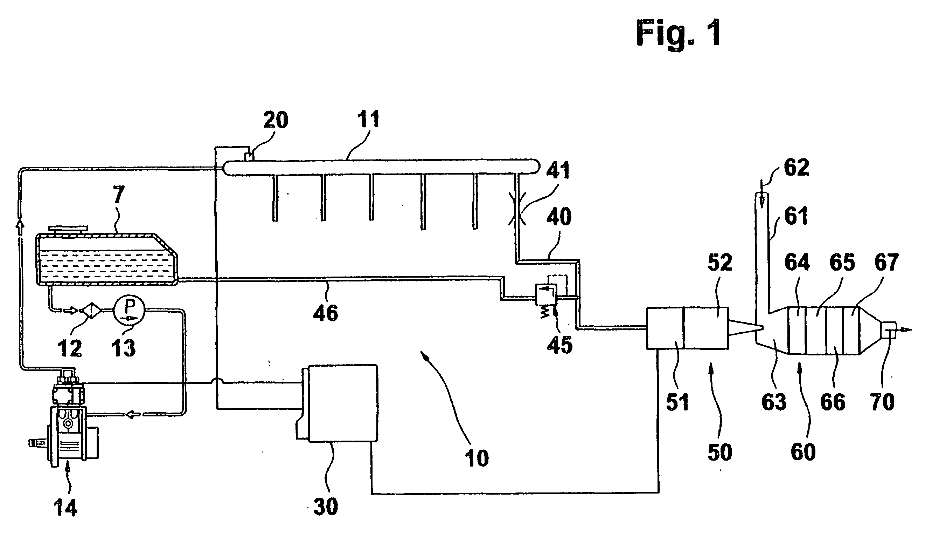

In Figur 1 ist eine als Common-Rail-System 10 ausgeführte Hochdruckanordnung abgebildet. Ein Kraftstoffbehälter 7 ist über ein Kraftstoffilter 12 und eine Vorförderpumpe 13 mit einer Hochdruckpumpe 14 verbunden, die zu einer Verteilerleiste 11 führt. Ein an der Verteilerleiste 11 befestigter Drucksensor 20 ist über eine elektrische Leitung mit einem Steuergerät 30 verbunden, das zur Ansteuerung der Hochdruckpumpe 14 dient. Eine Kraftstoffleitung 40 führt über eine Drossel 41 zu einem elektrisch steuerbaren Magnetventil 51. Die Kraftstoffleitung 40 ist über einen Druckregler 45 mittels einer Rücklaufleitung 46 mit dem Kraftstoffbehälter 7 verbunden. Das Magnetventil 51 ist Teil der Einspritzanordnung 50, die eine dem Magnetventil nachgelagerte Düsenanordnung 52 aufweist. Die Düsenanordnung 52 ragt mit ihrer Düsenöffnung in den Eingangsbereich 63 einer Katalysatoranordnung 60 hinein. Über eine zum Eingangsbereich 63 führende Zufuhrleitung 61 kann Abgas 62 vom Motor in den Katalysator eingebracht werden. Die Katalysatoranordnung weist hinter dem Eingangsbereich 63 einen Oxydationskatalysator 64, nachfolgend einen Speicherkatalysator 65 sowie einen weiteren Oxydationskatalysator 66 auf. Dem Oxydationskatalysator 66 nachgelagert ist ein Schalldämpfer 67. Mit dem Bezugszeichen 70 ist das der Katalysatoranordnung 60 entweichende entgiftete Abgas symbolisch dargestellt.

Der prinzipielle Aufbau eines Common-Rail-Einspritzsystems mit Verteilerleiste 11 ist an sich bereits bekannt. Aus einem Kraftstoffbehälter 7 wird über eine Vorförderpumpe, die sich in der Nähe des Kraftstoffbehälters befindet, zu einer Hochdruckpumpe 14 befördert, die im Motorraum des Kraftfahrzeugs angeordnet ist. Die Hochdruckpumpe 14 stellt die erforderlichen hohen Drücke in einem Bereich von 100 bar bis 2000 bar, bevorzugt in einem Bereich zwischen 300 und 2000 bar, insbesondere in einem Bereich zwischen 1350 bar bis 1650 bar, bereit. Die Verteilerleiste 11 stellt somit ein Hochdruckreservoir an Kraftstoff dar, dessen sich an ihm angeschlossene Common-Rail-Injektoren, die den Kraftstoff in die Brennräume des Motorblocks einspritzen, bedienen können. Die Common-Rail-Injektoren sind nicht explizit dargestellt; ansatzweise sind lediglich fünf zu solchen Common-Rail-Injektoren führende Kraftstoffleitungen abgebildet, über die der Kraftstoff von der Verteilerleiste 11 zu den Common-Rail-Injektoren geführt wird. Die Verwendung von Common-Rail-Injektoren zur Kraftstoffzufuhr in den Motorblock ist bekannt und beispielsweise in der DE 195 35 162 beschrieben. Der Drucksensor 20 überwacht den Kraftstoffdruck in der Verteilerleiste 11 und meldet diesen an das Steuergerät 30 weiter, das die Hochdruckpumpe 14 zur Gewährleistung eines bestimmten Drucks in der Verteilerleiste entsprechend steuert. Das Steuergerät 30 verarbeitet neben den elektrischen Signalen des Drucksensors 20 die Signale weiterer in der Figur nicht eingezeichneter Sensoren, wie beispielsweise Temperatur-, Druck-, Ruß-, NOx-, Kraftstoffund/oder NH3-Sensoren. Neben den zu den am Motorblock angebrachten Common-Rail-Injektoren führenden Kraftstoffleitungen ist erfindungsgemäß eine weitere Entnahmeleitung 40 vorgesehen, die über eine Drossel 41 und einem Magnetventil 51 zur Katalysatoranordnung führt, um den konstant hohen Druck der Verteilerleiste 11 zur Einspritzung flüssigen Kraftstoffs in den Abgastrakt zur Anfettung des Abgases zu nutzen. Die Drossel 41 begrenzt den Durchfluß. Der Druckregler 45 dient zur Regulierung des Drucks in der Leitung 40 und kann bei überhöhten Druckwerten Kraftstoff über die Rücklaufleitung 46 zum Kraftstoffbehälter 7 zurückführen. Das Magnetventil 51 wird ebenso wie die Hochdruckpumpe 30 vom Steuergerät 30 angesteuert und kann so in definierter Weise über die Düsenanordnung 52 flüssigen Kraftstoff fein zerstäubend in den Eingangsbereich 63 der Katalysatoranordnung 60 einspritzen. Die Zuführung des Kraftstoffs in den Abgasstrom erfolgt hierbei unter einem Druck von 100 bis 2000 bar, insbesondere unter einem Druck von 100 bis 600 bar. Der Druckbereich von 100 bis 600 bar ist gegenüber größeren Werten vorzuziehen, um eine merkliche Rückwirkung der Einspritzanordnung 50 auf das Common-Rail-System und die Motoreinspritzung zu vermeiden. Das Magnetventil 51 übernimmt die Dosierfunktion in der vorliegenden Einrichtung zur Abgasnachbehandlung. Der Kraftstoff vermischt sich mit dem zuströmenden Abgas 62 und gelangt in den Oxydationskatalysator 64 und daraufhin in den Speicherkatalysator 65, in dem die Stickoxyde des Abgases reduziert werden. Über einen nachfolgenden Oxydationskatalysator 66 und den Schalldämpfer 67 gelangt das entgiftete Abgas 70 über Auspuffrohre in die Umwelt.

In einer alternativen Ausführungsform kann das steuerbare Magnetventil 51 und die Düsenanordnung 52 in einer als Common-Rail-Injektor ausgebildeten Einspritzanordnung 50 integriert sein, wie sie auch zur Einspritzung von Kraftstoff in den Motorblock üblicherweise bei Common-Rail-Systemen verwendet wird. In diesem Falle ist bereits ein Druckregler im Common-Rail-Injektor integriert, so dass die Kraftstoffleitung 46 direkt an einem entsprechenden Ausgang des Common-Rail-Injektors angeschlossen ist. Die Zulaufdrossel 41 kann dann ebenfalls entfallen, da sie in handelsüblichen Common-Rail-Injektoren bereits integriert ist, so dass die als Common-Rail-Injektor ausgeführte Einspritzanordnung 50 in gleicher Weise wie am Motorblock installierten Common-Rail-Injektoren an der Verteilerleiste 11 angeschlossen ist. In einer weiteren alternativen Ausführungsform kann eine Vorrichtung zur Dämpfung von Druckschwankungen vorgesehen sein, die in der Leitung 40 zwischen der Verteilerleiste 11 und der Drossel 41 oder zwischen der Drossel und dem Magnetventil 51 angeordnet ist. Alternativ zur Ansteuerung durch das Steuergerät 30 kann das Magnetventil 51 beziehungsweise die Einspritzanordnung 50 auch durch ein separates Steuergerät, das nur für die Abgasnachbehandlung zuständig ist, betrieben werden. Eine mit einer Hochdruckanordnung, insbesondere einem Common-Rail-System 10, verbundene Einspritzanordnung 50 kann in ähnlicher Weise auch bei anderen Katalysatoren, insbesondere bei aktiven Denoxkatalysatoren beziehungsweise SCR-Katalysatoren ("SCR" = "Selective Catalytic Reduction"), zur Eindüsung flüssigen Kraftstoffs verwendet werden.

In einer weiteren alternativen Ausführungsform kann der Katalysatoranordnung noch ein Rußfilter nachgeschaltet sein. Dieser Rußfilter kann wahlweise separat mit dem flüssigen Hilfsmittel unter Einsatz eines vom Common-Rail-System gespeisten Common-Rail-Injektors beaufschlagt werden.

Alternativ kann die erfindungsgemäße Einrichtung beziehungsweise das erfindungsgemäße Verfahren auch ausschließlich zur Entfernung von Rußpartikeln eingesetzt werden. Dann entfällt die Katalysatoranordnung und die Einspritzung des Hilfsmittels erfolgt ausschließlich und direkt in das hierfür anstelle der Katalysatoranordnung vorgesehene Ruß- bzw. Partikelfilter.

Anstelle der beschriebenen Katalysatoranordnungen können auch andere Aggregate zur Abgasnachbehandlung, bei denen ein Hilfsmittel zugeführt werden soll, mit einem von einer Hochdruckanordnung gespeisten Ventil verbunden werden. Beispielsweise kann auch ein Oxidationskatalysator mit einem unter Hochdruck stehenden Hilfsmittel beaufschlagt werden. Der Oxidationskatalysator zusammen mit der Hochdruckeinspritzung wirkt dann als katalytischer Brenner, mit dem das Abgas beispielsweise für eine Partikelfilterregeneration oder für Entschwefelungsmaßnahmen aufgeheizt werden kann.

## Patentansprüche

1. Einrichtung zum Nachbehandeln von Abgasen einer Brennkraftmaschine mit einer von den Abgasen zu durchströmenden Nachbehandlungsanordnung und mit einem Ventil zum dosierten Einbringen eines Hilfsmittels zur Nachbehandlung in den Abgasstrom stromabwärts der Brennkraftmaschine, **dadurch gekennzeichnet, dass** das Ventil von einer Hochdruckanordnung (10) gespeist wird, wobei die Hochdruckanordnung das Hilfsmittel in flüssiger Form und unter einem Flüssigkeitsdruck in einem Bereich von 100 bis 2000 bar bereitstellt, so dass die Zuführung des Hilfsmittels in flüssiger Form strowab der Brennkraftmaschine in den Abgasstrom unter dem Flüssigkeitsdruck erfolgen kann.

2. Einrichtung nach Anspruch 1, **dadurch gekennzeichnet, dass** das Hilfsmittel ein in der Brennkraftmaschine eingesetzter Kraftstoff ist und dass die Hochdruckanordnung von einem Common-Rail-System (10) der Brennkraftmaschine gebildet ist.

3. Einrichtung nach einem der vorhergehenden Ansprüche, **dadurch gekennzeichnet, dass** zwischen der Hochdruckanordnung (10) und dem Ventil (51) eine Drossel (41) angeordnet ist.

4. Einrichtung nach einem der vorhergehenden Ansprüche, **dadurch gekennzeichnet, dass** zwischen der Hochdruckanordnung (10) und dem Ventil (51) ein mit einer zu einem Hilfsflüssigkeitsbehälter (7) führenden Rücklaufleitung (46) verbundener Druckregler (45) angeordnet ist.

5. Einrichtung nach einem der vorhergehenden Ansprüche, **dadurch gekennzeichnet, dass** das Ventil (51) ein elektrisch ansteuerbares Ventil, insbesondere ein Magnetventil, ist.

6. Einrichtung nach einem der vorhergehenden Ansprüche, **dadurch gekennzeichnet, dass** sich zwischen dem Ventil (51) und der Nachbehandlungsanordnung (60) eine Düsenanordnung (52) befindet.

7. Einrichtung nach Anspruch 5 und 6, **dadurch gekennzeichnet, dass** das Ventil (51) und die Düsenanordnung (52) in einer Einspritzanordnung (50), insbesondere in Form eines Common-Rail-Injektors , integriert sind.

8. Einrichtung nach einem der vorhergehenden Ansprüche, **dadurch gekennzeichnet, dass** die Nachbehandlungsanordnung eine Katalysatoranordnung zur Reduktion von in den Abgasen enthaltenen Stickoxiden und/oder eine Filteranordnung zur Entfernung von Rußpartikeln aus dem Strom des der Filteranordnung zugeführten Abgases aufweist.

9. Einrichtung nach einem der vorhergehenden Ansprüche, **dadurch gekennzeichnet, dass** die Nachbehandlungsanordnung eine Katalysatoranordnung (60) mit einem Speicherkatalysator (65) und mit einer stromabwärts des Speicherkatalysators angeordneten Oxidationsvorrichtung (66) aufweist.

10. Einrichtung nach Anspruch 9, **dadurch gekennzeichnet, dass** die Oxidationsvorrichtung ein Oxidationskatalysator ist.

11. Einrichtung nach einem der Ansprüche 9 oder 10, **dadurch** gekenzeichnet, dass die Katalysatoranordnung einen dem Speicherkatalysator vorgelagerten weiteren Oxidationskatalysator (64) aufweist.

12. Einrichtung nach einem der Ansprüche 9 bis 11, **dadurch gekennzeichnet, dass** die Katalysatoranordnung (60) einen Schalldämpfer (67) aufweist.

13. Verfahren zum Nachbehandeln von Abgasen einer Brennkraftmaschine, bei dem stromabwärts der Brennkraftmaschine dosiert ein Hilfsmittel zur Nachbehandlung dem Abgasstrom zugeführt wird, **dadurch gekennzeichnet, dass** die Zuführung des Hilfsmittels in flüssiger Form unter einem Druck von 100 bis 2000 bar, insbesondere unter einem Druck von 100 bis 600 bar, erfolgt.

14. Verfahren nach Anspruch 13, **dadurch gekennzeichnet, dass** das Hilfsmittel ein Kraftstoff ist und dass der Druck von einem Common-Rail-System (10) der Brennkraftmaschine bereitgestellt wird.

15. Verfahren nach Anspruch 13 oder 14, **dadurch gekennzeichnet, dass** die Nachbehandlung eine katalytische Reduktion in dem Abgas enthaltener Stickoxide und/oder eine, Entfernung von Rußpartikeln und/oder eine Regeneration eines Partikelfilters umfaßt.

16. Verfahren nach einem der Ansprüche 13 bis 15, **dadurch gekennzeichnet, dass** das Hilfsmittel zur Erwärmung des Abgases eingesetzt wird.

## Claims

1. Device for the aftertreatment of exhaust gases from an internal combustion engine, having an aftertreatment arrangement, through which the exhaust gases are to flow, and having a valve for the metered introduction of an auxiliary aftertreatment agent into the exhaust-gas stream downstream of the internal combustion engine, **characterized in that** the valve is fed by a high-pressure arrangement (10), the high-pressure arrangement providing the auxiliary agent in liquid form and at a liquid pressure in a range from 100 to 2000 bar, so that the auxiliary agent can be fed into the exhaust-gas stream in liquid form downstream of the internal combustion engine and at the liquid pressure.

2. Device according to Claim 1, **characterized in that** the auxiliary agent is a fuel used in the internal combustion engine, and **in that** the high-pressure arrangement is formed by a common rail system (10) of the internal combustion engine.

3. Device according to one of the preceding claims, **characterized in that** a throttle (41) is arranged between the high-pressure arrangement (10) and the valve (51).

4. Device according to one of the preceding claims, **characterized in that** a pressure regulator (45), which is connected to a return line (46) leading to an auxiliary liquid tank (7), is arranged between the high-pressure arrangement (10) and the valve (51).

5. Device according to one of the preceding claims, **characterized in that** the valve (51) is an electrically actuable valve, in particular a solenoid valve.

6. Device according to one of the preceding claims, **characterized in that** there is a nozzle arrangement (52) between the valve (51) and the aftertreatment arrangement (60).

7. Device according to Claims 5 and 6, **characterized in that** the valve (51) and the nozzle arrangement (52) are integrated in an injection arrangement (50), in particular in the form of a common rail injector.

8. Device according to one of the preceding claims, **characterized in that** the aftertreatment arrangement includes a catalytic converter arrangement for the reduction of nitrogen oxides contained in the exhaust gases and/or a filter arrangement for the removal of particulates from the stream of exhaust gas fed to the filter arrangement.

9. Device according to one of the preceding claims, **characterized in that** the aftertreatment arrangement has a catalytic converter arrangement (60) with a storage catalytic converter (65) and with an oxidation apparatus (66) arranged downstream of the storage catalytic converter.

10. Device according to Claim 9, **characterized in that** the oxidation apparatus is an oxidation catalytic converter.

11. Device according to Claim 9 or 10, **characterized in that** the catalytic converter arrangement includes a further oxidation catalytic converter (64) mounted upstream of the storage catalytic converter.

12. Device according to one of Claims 9 to 11, **characterized in that** the catalytic converter arrangement (60) includes a silencer (67).

13. Method for the aftertreatment of exhaust gases from an internal combustion engine, in which an auxiliary aftertreatment agent is fed to the exhaust-gas stream downstream of the internal combustion engine, **characterized in that** the auxiliary agent is supplied in liquid form at a pressure of from 100 to 2000 bar, in particular at a pressure of from 100 to 600 bar.

14. Method according to Claim 13, **characterized in that** the auxiliary agent is a fuel, and **in that** the pressure is provided by a common rail system (10) of the internal combustion engine.

15. Method according to Claim 13 or 14, **characterized in that** the aftertreatment comprises a catalytic reduction of nitrogen oxides contained in the exhaust gas and/or a removal of particulates and/or a regeneration of a particulate filter.

16. Method according to one of Claims 13 to 15, **characterized in that** the auxiliary agent is used to heat the exhaust gas.

## Revendications

1. Dispositif de post-traitement des gaz d'échappement dans un moteur à combustion interne, comportant un système de post-traitement devant être traversé par les gaz d'échappement et comportant une soupape permettant d'ajouter de façon dosée un additif pour le post-traitement dans le flux des gaz d'échappement, en aval du moteur à combustion interne,
**caractérisé en ce que**
la soupape est alimentée par un système haute pression (10), le système haute pression mettant à disposition l'additif sous forme liquide et sous une pression de liquide comprise dans une plage allant de 100 et 2 000 bars, de telle sorte que l'ajout de l'additif sous forme liquide en aval du moteur à combustion interne dans le flux de gaz d'échappement peut s'effectuer sous la pression de liquide.

2. Dispositif selon la revendication 1,
**caractérisé en ce que**
l'additif est un carburant utilisé dans le moteur à combustion interne, et le système haute pression est formé par un système Common-Rail (10) du moteur à combustion interne.

3. Dispositif selon l'une des revendications précédentes,
**caractérisé en ce qu'**
un étranglement (41) est disposé entre le système haute pression (10) et la soupape (51).

4. Dispositif selon l'une des revendications précédentes,
**caractérisé en ce qu'**
un régulateur de pression (45) relié à une conduite de retour (46) conduisant vers un réservoir de liquide additif (7) est disposé entre le système haute pression (10) et la soupape (51).

5. Dispositif selon l'une des revendications précédentes,
**caractérisé en ce que**
la soupape (51) est une soupape pouvant être commandée électriquement, en particulier une électrovanne.

6. Dispositif selon l'une des revendications précédentes,
**caractérisé en ce qu'**
un système de buse (52) se trouve entre la soupape (51) et le système de post-traitement (60).

7. Dispositif selon les revendications 5 et 6,
**caractérisé en ce que**
la soupape (51) et le système de buse (52) sont intégrés dans un système d'injection (50), en particulier sous la forme d'un injecteur Common-Rail.

8. Dispositif selon l'une des revendications précédentes,
**caractérisé en ce que**
le système de post-traitement présente un système de catalyseur pour la réduction des oxydes d'azote contenus dans les gaz d'échappement et/ou un système de filtre pour éliminer les particules de suie du flux des gaz d'échappement dirigé vers le système de filtre.

9. Dispositif selon l'une des revendications précédentes,
**caractérisé en ce que**
le système de post-traitement présente un système de catalyseur (60) comportant un catalyseur d'accumulation (65) et comportant un dispositif d'oxydation (66) disposé en aval du catalyseur d'accumulation.

10. Dispositif selon la revendication 9,
**caractérisé en ce que**
le dispositif d'oxydation est un catalyseur d'oxydation.

11. Dispositif selon l'une des revendications 9 ou 10,
**caractérisé en ce que**
le système de catalyseur présente un autre catalyseur d'oxydation (64) disposé avant le catalyseur d'accumulation.

12. Dispositif selon l'une des revendications 9 à 11,
**caractérisé en ce que**
le système de catalyseur (60) présente un silencieux (67).

13. Procédé de traitement ultérieur des gaz d'échappement d'un moteur à combustion interne, selon lequel un additif pour le post-traitement du flux de gaz d'échappement est ajouté de façon dosée en aval du moteur à combustion interne,
**caractérisé en ce que**
l'ajout de l'additif sous forme liquide s'effectue sous une pression de 100 à 2 000 bars, en particulier sous une pression de 100 à 600 bars.

14. Procédé selon la revendication 13,
**caractérisé en ce que**
l'additif est un carburant et la pression est mise à disposition par un système Common-Rail (10) du moteur à combustion interne.

15. Procédé selon la revendication 13 ou 14,
**caractérisé en ce que**
le post-traitement comprend une réduction catalytique des oxydes d'azote contenus dans les gaz d'échappement et/ou une élimination de particules de suie et/ ou une régénération d'un filtre à particules.

16. Procédé selon l'une des revendications 13 à 15,
**caractérisé en ce que**
l'additif est utilisé pour chauffer les gaz d'échappement.
